# EUROPÄISCHE PATENTSCHRIFT

(11) **EP 3 354 460 B1**
(45) Veröffentlichungstag und Bekanntmachung des Hinweises auf die Patenterteilung: **07.08.2019**
(21) Anmeldenummer: 18150168.5
(22) Anmeldetag: 03.01.2018
(51) Int. Cl.: B41C 1/05, B41N 1/06

(54) **VERFAHREN ZUM GRAVIEREN EINER INTAGLIO-STICHTIEFDRUCKPLATTE**
METHOD FOR ENGRAVING AN INTAGLIO DEEP PRESSURE PLATE
PROCÉDÉ DE GRAVURE D'UNE PLAQUE D'IMPRESSION EN CREUX

(30) Priorität: 30.01.2017 AT 500612017
(43) Veröffentlichungstag der Anmeldung: 01.08.2018
(73) Patentinhaber: Oesterreichische Banknoten- und Sicherheitsdruck GmbH, 1090 Wien (AT)
(72) Erfinder: GASSNER, Thomas, 1190 Wien (AT); SAMBOLEC, Drazen, 1160 Wien (AT)
(74) Vertreter: Gibler & Poth Patentanwälte KG

(56) Entgegenhaltungen:
- EP-A1- 1 580 020
- EP-A2- 2 743 025
- WO-A1-2006/045128

## Beschreibung

Die Erfindung betrifft ein Verfahren zum Gravieren einer Intaglio-Stichtiefdruckplatte mit einem Laser.

Es sind Verfahren bekannt, bei welchen für die Erzeugung einer Intaglio-Stichtiefdruckplatte diese direkt mittels eines Lasers graviert werden. Derartige Verfahren werden auch als Direct Laser Engraving (DLE) bezeichnet. Hierbei wird die Oberfläche des Rohlings für die Intaglio-Stichtiefdruckplatte in mehreren Schichten mittels des Lasers abgerastet, um die Oberfläche Schicht für Schicht abzutragen. Dadurch lassen sich auch komplexere dreidimensionale Tiefenprofile für den Intaglio-Stichtiefdruck herstellen. Hierbei wird aus einem dreidimensionalen Tiefenprofil mehrere zweidimensionale Gravurschichten generiert, welche nacheinander abgetragen werden.

Die EP 2 743 025 A2 zeigt ein Verfahren, bei welchem eine Stichtiefdruckplatte direkt mit einem Laser in mehreren Gravierschichten graviert wird. Um beim Gravieren auftretende Rückstände zu entfernen wird nach der Gravur jeder Gravierschicht die Stichtiefdruckplatte abgebürstet.

Die WO 2006/045128 A1 zeigt eine Vorrichtung und ein Verfahren zum Gravieren von Druckplatten mit wenigstens einer Laserstrahlquelle und einer Kalibriereinrichtung.

Die EP 1 580 020 A1 zeigt eine Intaglio-Stichtiefdruckplatte. Aufgrund asymmetrisch zueinander angeordneter Flanken einer Vertiefung können Sicherheitselemente von einer Seite sichtbar- und von der anderen Seite unsichtbar sein.

Hierbei hat sich gezeigt, dass bei der Lasergravur in der Tiefe Probleme auftreten. Diese Probleme und Abweichungen können mit einer Vielzahl an Faktoren zusammenhängen und führen dazu, dass das mittels Laser gravierte Tiefenprofil von den Vorgaben abweicht. Ein mittels Laser gravierter Kanal verjüngt sich nach unten hin, da die Energie weiter unten in einer Gravur nicht mehr so gleichmäßig ins Material eingebracht werden kann wie im Ausgangszustand. Die Nicht-Ebenheit des bereits bearbeiteten Materials sowie Staub- und Materialrückstände reduzieren die Leistung, die effektiv ins Material übertragen werden kann. In einem bereits bearbeiteten Laserkanal findet aufgrund der Geometrie auch eine Art Fokussierung des Lasers in die Mitte statt, wodurch an den Flanken weniger Leistung zum Abtrag zur Verfügung steht. Diese Effekte führen dazu, dass beispielsweise eine Gravurlinie mit einem vorgegebenen trapezförmigen Querschnitt lediglich als flachere Mulde graviert wird, da die vorgegebene Tiefe nicht erreicht wird und die Flankenwinkel mit zunehmender Tiefe flacher werden.

Aufgabe der Erfindung ist es daher ein Verfahren der eingangs genannten Art anzugeben, mit welchem die genannten Nachteile vermieden werden können, mit welchem es möglich ist mit wenig Aufwand die Qualität der Gravur einer Intaglio-Stichtiefdruckplatte zu verbessern.

Erfindungsgemäß wird dies durch die Merkmale des Patentanspruches 1 erreicht.

Dadurch ergibt sich der Vorteil, dass lediglich mit einem geringen Aufwand, nämlich einer Adaptierung der Steuer-Gravurschichten, es möglich ist, die Qualität einer Lasergravur einer Intaglio-Stichtiefdruckplatte wesentlich zu verbessern, und die Abweichung eines Soll-Tiefenprofils von dem tatsächlich gravierten Tiefenprofil wesentlich zu verringern. Hierbei hat sich überraschenderweise gezeigt, dass eine Vielzahl an störenden Effekten, welche zum Teil sehr unterschiedliche Ursachen haben, durch die einfache Adaptierung der Steuer-Gravurschichten mittels des Korrektur-Offsets behoben werden können. Dadurch sind wesentlich aufwendigere Gegenmaßnahmen, wie beispielsweise eine Adaptierung der Laserenergie, welche apparative Änderungen der Lasergravurvorrichtung benötigen, oder eine aufwendige Nachbearbeitung der Lasergravur, nicht notwendig.

Die Unteransprüche betreffen weitere vorteilhafte Ausgestaltungen der Erfindung.

Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich eine bevorzugte Ausführungsform beispielhaft dargestellt ist, näher beschrieben. Dabei zeigt:
Fig. 1 eine bevorzugte Ausführungsform eines Soll-Tiefenprofils in Aufsicht;
Fig. 2 die bevorzugte Ausführungsform eines Soll-Tiefenprofils in Seitenansicht;
Fig. 3 die bevorzugte Ausführungsform eines Soll-Tiefenprofils in Seitenansicht, wobei zusätzlich die Gravurschichten und ein Verlauf der Steuer-Gravurschichten abgebildet sind;
Fig. 4 eine Soll-Gravurschicht aus Fig. 3;
Fig. 5 die Steuer-Gravurschicht basierend auf Fig. 4; und
Fig. 6 die Gravur der Steuer-Gravurschicht aus Fig. 5 mittels des Lasers.

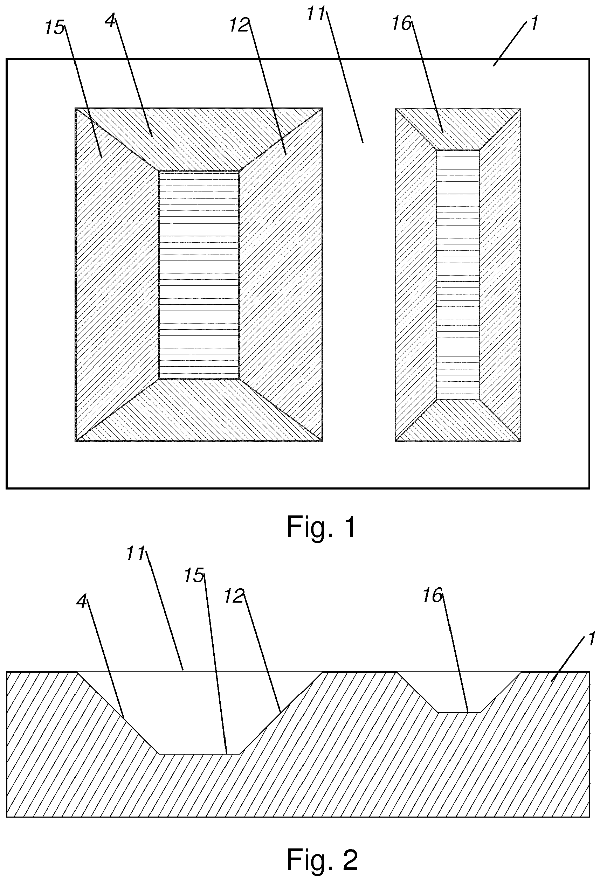

Die Fig. 1 bis 6 zeigen verschiedene Schritte und Darstellungen einer bevorzugten Ausführungsform eines Verfahrens zum Gravieren einer Intaglio-Stichtiefdruckplatte 1 mit einem Laser. Der Intaglio-Stichtiefdruck ist ein Druckverfahren zum Drucken mit einer gravierten Intaglio-Stichtiefdruckplatte 1, wobei die Form der Gravur nicht nur als Farbe auf die zu bedruckenden Bögen aufgetragen wird, sondern es auch zu einer nachhaltigen und oft auch tastbaren plastischen Verformung der bedruckten Bögen kommt, weshalb der Intaglio-Stichtiefdruck oft als Sicherheitsmerkmal für Sicherheitsdokumente wie beispielsweise Banknoten, Briefmarken oder Wertpapieren verwendet wird.

Der Laserstrahl des Lasers wird bevorzugt mittels eines steuerbaren Spiegelsystems des Lasers gelenkt, wobei das Spiegelsystem durch eine Steuervorrichtung gesteuert wird.

Weiters kann bevorzugt ein Auftreffen des Laserstrahls des Lasers auf die Intaglio-Stichtiefdruckplatte 1 mittels eines Shutterelementes vorgebbar gesteuert werden, wobei das Shutterelementes durch die Steuervorrichtung gesteuert wird.

Vorgesehen ist, dass ein Tiefenprofil 2 der Intaglio-Stichtiefdruckplatte 1 durch Gravieren mehrerer Gravurschichten 3 mittels des Lasers erzeugt wird, wobei anhand eines vorgegebenen Soll-Tiefenprofils 4 für jede der Gravurschichten 3 eine Soll-Gravurschicht 5 bestimmt wird. Die fertige Intaglio-Stichtiefdruckplatte 1 weist ein dreidimensionales Tiefenprofil 2 auf, welches beim Druckvorgang gegengleich auf die zu bedruckenden Bögen aufgetragen wird. Zum Gravieren des dreidimensionalen Tiefenprofils 2 der Intaglio-Stichtiefdruckplatte 1 werden bei einem Rohling der Intaglio-Stichtiefdruckplatte 1 mehrere zweidimensionale Gravurschichten 3 abgetragen, bis das Tiefenprofil 2 der Intaglio-Stichtiefdruckplatte 1 erreicht ist. Der Rohling kann ursprünglich eine plane Oberfläche aufweisen. Um das Tiefenprofil 2 zu erreichen wird ein vorgegebenes Soll-Tiefenprofil 4 erstellt, welches dem zu erreichenden Tiefenprofil 2 entspricht. Aus zur Oberseite 11 parallelen Schnitten des Soll-Tiefenprofils 4 werden dann die Soll-Gravurschichten 5 erstellt.

Weiters ist vorgesehen, dass für Ränder 6 der zu gravierenden Bereiche 7 der Soll-Gravurschichten 5 Flankenwinkel bestimmt werden, wobei für jede Soll-Gravurschicht 5 und jeden Flankenwinkel in dieser Soll-Gravurschicht 5 ein Korrektur-Offset 8 bestimmt wird. Die Soll-Gravurschicht 5 weist zwei verschiedene Arten an Bereichen auf, nämlich jene zu gravierende Bereiche 7, in welchen der Laser Material abtragen soll, und nicht zu gravierende Bereiche 13, in welchen kein Abtrag durch den Laser erfolgen soll. An den Rändern 6 zwischen den zu gravierenden Bereichen 7, welche die Grenze zwischen den zu gravierenden Bereichen 7 und den nicht zu gravierenden Bereichen 13 darstellen, wird anhand des Soll-Tiefenprofils 4 der jeweilige Flankenwinkel bestimmt. Der Flankenwinkel ist hierbei jener Winkel, welcher die Flanke 12, zu welcher der jeweilige Rand 6 gehört, zu einer Ebene einer Oberseite 11 der Intaglio-Stichtiefdruckplatte 1 einnimmt.

Für jede der Soll-Gravurschichten 5 und jeden in einer der Soll-Gravurschichten 5 vorkommenden Flankenwinkel wird ein sogenannter Korrektur-Offset 8 bestimmt. Der Korrektur-Offset 8 ist eine Größe, welche zur Korrektur der eingangs genannten Störungen, beispielsweise dem Einfluss der Nicht-Ebenheit des bereits bearbeiteten Materials, den sich verengenden Kanal sowie Staub- und Materialrückstände auf die Abtragung durch den Laser, geeignet ist. Hierbei hat sich gezeigt, dass für die Bestimmung des Korrektur-Offsets 8 besonders zwei Größen maßgeblich sind, nämlich das Maß des bereits darüber abgetragenen Materials, welches aus der Tiefe der jeweiligen Soll-Gravurschicht 5 hervorgeht, sowie dem Flankenwinkel, da insbesondere geometrische Einflüsse auf die Abtragsfähigkeiten des Lasers mit zunehmendem Flankenwinkel zunehmen.

Weiters ist vorgesehen, dass für die Erstellung von Steuer-Gravurschichten 9 die zu gravierenden Bereiche 7 jeder Soll-Gravurschichten 5 an den Rändern 6 mittels des jeweiligen Korrektur-Offsets 8 adaptiert werden, wobei die Steuer-Gravurschichten 9 zur Steuerung des Lasers beim Gravieren der Gravurschichten 3 verwendet werden. Die Steuer-Gravurschichten 9 werden zur Steuerung des Lasers verwendet. Die Steuer-Gravurschichten 9 werden aus den Soll-Gravurschichten 5 erstellt und stellen eine unter Verwendung des Korrektur-Offsets 8 korrigierte Form der Soll-Gravurschichten 5 dar. Durch die Verwendung der Steuer-Gravurschichten 9 statt den Soll-Gravurschichten 5 zur Steuerung des Lasers kann ein Tiefenprofil 2 der Intaglio-Stichtiefdruckplatte 1 erzeugt werden, welches dem Soll-Tiefenprofil 4 sehr nahe kommt. Hierbei kann vorgesehen sein, dass die Steuer-Gravurschichten 9 zur Steuerung der Steuereinrichtung des Lasers verwendet werden.

Dadurch ergibt sich der Vorteil, dass lediglich mit einem geringen Aufwand, nämlich einer Adaptierung der Steuer-Gravurschichten 5, es möglich ist, die Qualität einer Lasergravur einer Intaglio-Stichtiefdruckplatte 1 wesentlich zu verbessern, und die Abweichung eines Soll-Tiefenprofils 4 von dem tatsächlich gravierten Tiefenprofil 2 wesentlich zu verringern. Hierbei hat sich überraschenderweise gezeigt, dass eine Vielzahl an störenden Effekten, welche zum Teil sehr unterschiedliche Ursachen haben, durch die einfache Adaptierung der Steuer-Gravurschichten 9 mittels des Korrektur-Offsets 8 behoben werden können. Dadurch sind wesentlich aufwendigere Gegenmaßnahmen, wie beispielsweise eine Adaptierung der Laserenergie, welche apparative Änderungen der Lasergravurvorrichtung benötigen, oder eine aufwendige Nachbearbeitung der Lasergravur, nicht notwendig.

Insbesondere kann vorgesehen sein, dass die Intaglio-Stichtiefdruckplatte 1 zur Herstellung eines Sicherheitsdokumentes verwendet wird, da dadurch zuverlässig Sicherheitsmerkmale in hoher Qualität auf das Sicherheitsdokument aufgeprägt werden können.

Besonders bevorzugt kann vorgesehen sein, dass beim Gravieren der Gravurschichten 3 durch den Laser durchgehende Linien abgetragen werden und kein Punktraster erzeugt wird.

Besonders bevorzugt kann vorgesehen sein, dass direkt eine Intaglio-Stichtiefdruckplatte 1 bestehend aus Metall, insbesondere Messing, vom Laser graviert wird. Direkt graviert bedeutet in dem Zusammenhang, dass nicht zunächst ein sogenannter Master aus einem wenig stabilen Material wie Kunststoffen graviert, und von diesem Master die endgültige Druckplatte abgeformt wird, sondern die zum Drucken vorgesehene Intaglio-Stichtiefdruckplatte 1 direkt vom Laser graviert wird. Dadurch kann ein Bearbeitungsschritt bei der Herstellung der Intaglio-Stichtiefdruckplatte 1 entfallen, wobei auch die damit verbunden Fehler vermieden werden können. Messing bietet den Vorteil, dass dieses sowohl leicht zu bearbeiten ist, und gleichzeitig den hohen mechanischen Belastungen des Intaglio-Stichtiefdruckes gewachsen ist.

Insbesondere kann vorgesehen sein, dass eine im Wesentlichen ebene Intaglio-Stichtiefdruckplatte 1 graviert wird. Solche ebenen Druckplatten sind besonders flexibel im Einsatz.

Bevorzugt kann beim Verfahren vorgesehen sein, dass als Laser ein Pulslaser, besonders bevorzugt ein Ultrakurzpulslaser, verwendet wird. Solche Pulslaser senden den Laserstrahl nicht kontinuierlich aus, sondern in Form von periodisch wiederkehrenden kurzen Pulsen, wobei die momentane Ausgangsleistung des Lasers während des Pulses ein Vielfaches der zeitlich gemittelten Ausgangsleistung des Lasers ist. Dadurch kann eine gezielte Abtragung von Material der Intaglio-Stichtiefdruckplatte 1, ohne ungebührend großen thermischen Beanspruchung der Intaglio-Stichtiefdruckplatte 1 erreicht werden.

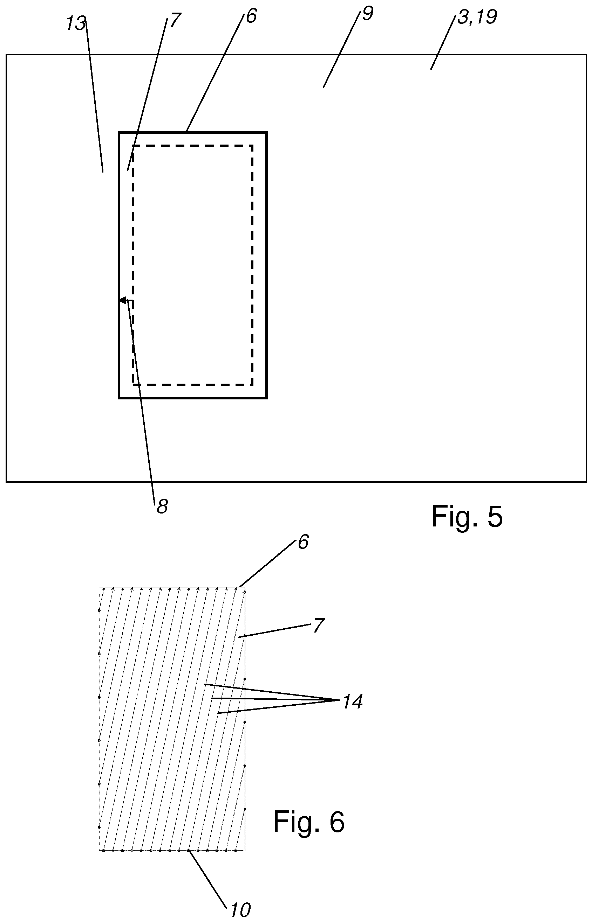

Beim Gravieren der Gravurschichten 3 wird das Spiegelsystem des Lasers bevorzugt derart bewegt, dass ein Laserstrahl des Lasers beim Abtrag der zu gravierenden Bereiche 7 der jeweiligen Steuer-Gravurschicht 9 in im Wesentlichen parallelen Zeilen 14 über den zu gravierenden Bereich 7 bewegt wird. Ein als Fläche ausgebildeter zu gravierender Bereich 7 wird daher vom Laser ähnlich einer Schraffur abgerastert. Eine derartige Vorgehensweise ist beispielhaft in Fig. 6 dargestellt.

Bevorzugt kann vorgesehen sein, dass Steuer-Gravurschichten 9 anhand eines computerimplementierten Verfahren erstellt werden. Das Soll-Tiefenprofil 4 kann insbesondere in Form einer Datei vorliegen, in welcher die Höheninformationen als digitale Daten erstellt werden. Aus dem Soll-Tiefenprofil 4 werden dann, zusammen mit der Information der vorgesehenen Abtragstiefe der einzelnen Gravurschichten 3, die Soll-Gravurschicht 5 ermittelt.

In Fig. 1 und 2 ist eine bevorzugte Ausführungsform eines Soll-Tiefenprofils 4 mit einer ersten Vertiefung 15 und einer zweiten Vertiefung 16 dargestellt. Die in Fig. 1 bis 6 dargestellten Abbildungen sind stark simplifiziert und bezüglich deren Größenverhältnissen stark verzerrt dargestellt, und dienen lediglich dazu die einzelnen Verfahrensschritte besser zu erläutern.

Das Soll-Tiefenprofil 4 wird durch rechnerische Schnitte parallel zur Oberseite 11 in mehrere, jeweils einer der Gravurschichten 3 zugeordnete Soll-Gravurschicht 5 unterteilt. Die Soll-Gravurschicht 5 können anschließend abgespeichert werden.

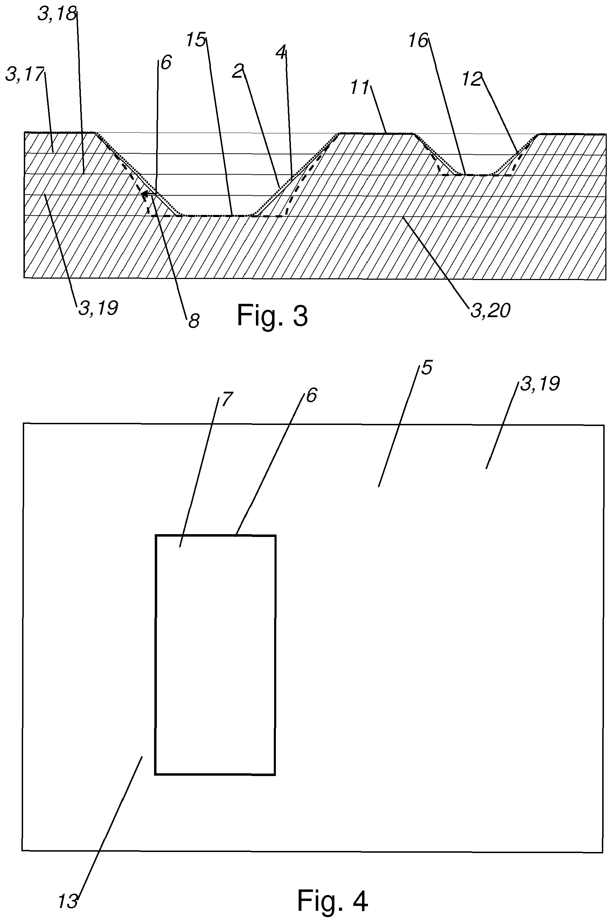

Insbesondere kann die der Oberseite 11 am nächsten Gravurschicht 3 die erste Gravurschicht 17 sein, wobei mit zunehmender Tiefe weitere Gravurschichten 18, 19, 20 angeordnet sind. Bei dem in Fig. 3 dargestellten bevorzugten Ausführungsform aus Fig. 1 und 2 ist dies die zweite Gravurschicht 18, die dritte Gravurschicht 19 und die vierte Gravurschicht 20.

In Fig. 3 ist dargestellt, wie in der bevorzugten Ausführungsform aus dem Soll-Tiefenprofil 4 die Soll-Gravurschichten 5 für die einzelnen Gravurschichten 3 bestimmt werden. Wo die jeweilige Gravurschicht 3 die Flanke 12 schneidet, ist der Rand 6 des zu gravierenden Bereiches 7 der jeweiligen Soll-Gravurschichten 5. Auch der Flankenwinkel für den jeweiligen Rand geht aus dem Soll-Tiefenprofil 4 hervor. In Fig. 4 ist die Soll-Gravurschichten 5 der dritten Gravurschicht 19 aus Fig. 3 dargestellt.

Für die einzelnen Soll-Gravurschichten 5 werden Steuer-Gravurschichten 9 erstellt. Für die Erstellung der Steuer-Gravurschichten 9 erfolgt eine Adaptierung der Ränder 6 der zu gravierenden Bereiche 7 durch den Korrektur-Offset 8. Das Prinzip hinter dem Korrektur-Offset 8 ist, dass durch eine entsprechende Vergrößerung der zu gravierenden Bereiche 7 die Effekte, welche dazu führen dass das gravierte Tiefenprofil 2 von dem Soll-Tiefenprofil 4 abweicht, aufgehoben werden.

Besonders bevorzugt kann vorgesehen sein, dass eine Wertetabelle an Korrektur-Offsets 8 für unterschiedliche Flankenwinkel und Tiefen bereitgestellt wird. Dadurch kann einfach für jeden Rand ein passender Korrektur-Offsets 8 bereitgestellt werden.

Insbesondere können in einem Vorverfahren Kalibrierungsmessungen erfolgen, um die Wertetabelle an Korrektur-Offsets 8 für unterschiedliche Flankenwinkel und Tiefen zu ermitteln. Im Rahmen der Kalibrierungsmessungen können bevorzugt Vertiefungen mit unterschiedlichen Flankenwinkel in einen Prüfkörper, bevorzugt aus demselben Material wie die Intaglio-Stichtiefdruckplatte 1, mittels des Lasers eingraviert werden. Durch Vermessung der Abweichung der gravierten Vertiefung zu der Vorgabe können mittels iterativen Verfahren zu vorgegebenen Flankenwinkeln für vorgegebene Tiefen der einzelne Korrektur-Offset 8 bestimmt werden.

Für die Erstellung der Wertetabelle an Korrektur-Offsets 8 können insbesondere mehrere diskrete Flankenwinkel in einem vorgegebenen Winkelbereich verwendet werden, wobei die einzelnen diskrete Flankenwinkel einen gleichbleibenden Abstand, bevorzugt 5°, zueinander haben. Sollte der Flankenwinkel eines Randes 6 einer Soll-Gravurschicht 5 zwischen den diskreten Flankenwinkel in der Wertetabelle sein, kann ein zutreffender Korrektur-Offset 8 interpoliert werden.

Die Flankenwinkel können insbesondere kleiner oder gleich als 70° sein.

Weiters kann vorgesehen sein, dass die Flankenwinkel größer oder gleich 35° sind.

Die Wertetabelle kann besonders bevorzugt die Korrektur-Offsets 8 für die Flankenwinkel 35°, 40°, 45°, 50°, 55°, 60°, 65°, 70° und 75° aufweisen.

Weiters können für die Erstellung der Wertetabelle an Korrektur-Offsets 8 für jede Tiefe der Gravurschichten 3 ein Satz an Korrektur-Offsets 8 für jeden diskrete Flankenwinkel bestimmt werden.

Alternativ zu der Wertetabelle kann der Korrektur-Offset 8 für einen gegebenen Flankenwinkel und Tiefe auch berechnet werden. Die Berechnung kann anhand von Parametern erfolgen, welche ebenfalls durch Messungen mit unterschiedlichen Flankenwinkeln bestimmt werden können.

Weiters kann vorgesehen sein, dass bei der Bestimmung des Korrektur-Offsets 8 ebenfalls die Orientierung des Randes zur der Bewegungsrichtung des Laserstrahls auf der Intaglio-Stichtiefdruckplatte 1 berücksichtigt wird. Hierbei hat sich gezeigt, dass sich geringfügige Unterschiede dadurch ergeben, ob der Laserstrahl im Wesentlichen parallel oder senkrecht zu dem Rand 6 verläuft.

Bevorzugt kann vorgesehen sein, dass anhand den vorhandenen Flankenwinkel in dem Soll-Tiefenprofil 4 die Abtragtiefe der einzelnen Gravurschichten 3 zueinander bestimmt wird. Die Abtragtiefe ist dabei der Abstand der einzelnen benachbarten Gravurschichten 3. Bei flachen Flankenwinkeln wird eine geringen Abtragtiefe gewählt, um einer Stufenbildung bei dem Tiefenprofil zu vermeiden, während bevorzugt bei lediglich hohen Flankenwinkel größere Abtragtiefen gewählt werden. Die Abtragtiefe kann durch die Leistung des Lasers und/oder die Bewegungsgeschwindigkeit des Fokuspunktes 10 auf der Intaglio-Stichtiefdruckplatte 1 eingestellt werden.

Insbesondere kann vorgesehen sein, dass pro Gravurschicht 3 eine Tiefe von 4 µm bis 10 µm, insbesondere im Wesentlichen 8µm, abgetragen wird.

Bevorzugt kann vorgesehen sein, dass die Abtragtiefe konstant ist, also sich mit Tiefe nicht ändert. Dadurch braucht die Leistung und die Bewegungsgeschwindigkeit des Lasers nicht variiert zu werden.

Weiters kann vorgesehen sein, dass beim Gravieren der Gravurschichten 3 die Leistung des Lasers und/oder die Bewegungsgeschwindigkeit des Fokuspunktes 10 auf der Intaglio-Stichtiefdruckplatte 1 konstant gehalten wird.

Insbesondere kann vorgesehen sein, dass das Soll-Tiefenprofil 4 lediglich gerade Flanken 12 aufweist. Eine gerade Flanke bedeutet, dass der Flankenwinkel des Soll-Tiefenprofils 4 über die Tiefe konstant bleibt, wie beispielsweise in Fig . 2 und 3 dargestellt. Das hat den Vorteil, dass die Abweichung zwischen dem Soll-Tiefenprofil 4 und dem tatsächlich gravierten Tiefenprofil besonders gering gehalten werden kann.

Alternativ kann vorgesehen sein, dass sich der Flankenwinkel einer Flanke 12 des Soll-Tiefenprofils 4 über die Tiefe variiert. In diesem Fall kann durch die Auswahl des Korrektur-Offsets für den Flankenwinkel der jeweiligen Tiefe das Ergebnis der Gravur verbessert werden, wobei Abweichungen möglich sind.

Insbesondere kann vorgesehen sein, dass bei einem zu gravierenden Bereiche 7, bevorzugt bei jedem zu gravierenden Bereich 7, der Rand 6 umlaufend den gleichen Flankenwinkel aufweist.

Alternativ kann vorgesehen sein, dass bei einem zu gravierenden Bereiche 7 der Rand 6 verschiedene Flankenwinkel aufweist, beispielsweise wenn der Flankenwinkel längsseitig ein anderer ist als stirnseitig.

Besonders bevorzugt kann vorgesehen sein, dass das Soll-Tiefenprofil 4 im Wesentlichen lediglich einen einzigen Flankenwinkel aufweist. Mit anderen Worten können bevorzugt sämtliche Flanken 12 des Soll-Tiefenprofils 4 die gleiche Neigung aufweisen. Dadurch kann das Erstellen der Wertetabelle für die Korrektur-Offsets 8 wesentlich vereinfacht werden, da lediglich ein Flankenwinkel zu berücksichtigen ist.

Der Korrektur-Offset 8 kann insbesondere eine Länge sein.

Besonders bevorzugt kann vorgesehen sein, dass die zu gravierenden Bereiche 7 der Soll-Gravurschichten 5 zur Erstellung der Steuer-Gravurschichten 9 an den Rändern 6 um den jeweiligen Korrektur-Offset 8 umlaufend vergrößert werden. Hierbei stellt der Korrektur-Offset 8 eine Länge dar, um welche der Rand 6 der zu gravierenden Bereiche 7 nach außen, verschoben wird, wodurch die zu gravierenden Bereiche 7 vergrößert werden. Dadurch kann eine geometrisch besonders einfache Adaptierung der Ränder 6 der zu gravierenden Bereiche 7 erreicht werden.

In Fig. 5 ist der adaptierte Rand 6 des zu gravierenden Bereiches 7 der Steuer-Gravurschicht 9 für die dritte Gravurschicht beispielhaft dargestellt. Der ursprüngliche Rand des zu gravierenden Bereiches 7 der Soll-Gravurschicht 5 ist strichliniert dargestellt. Der Korrektur-Offset 8 ist als Pfeil dargestellt, um dessen Betrag der Rand 6 vergrößert wurde.

Sofern der Rand 6 unterschiedliche Flankenwinkel, und daher auch unterschiedliche Korrektur-Offsets 8 aufweist, wird der zu gravierende Bereich 7 am jeweiligen Abschnitt des Randes 6 um den jeweiligen Korrektur-Offset 8 vergrößert.

Weiters kann vorgesehen sein, dass die zu gravierenden Bereiche 7 der Soll-Gravurschichten 5 zur Erstellung der Steuer-Gravurschichten 9 an den Rändern 6 um einen halben Durchmesser eines Fokuspunktes 10 des Lasers umlaufend verkleinert werden. Durch diese zusätzliche Änderung des zu gravierenden Bereiches 7 kann ein Effekt korrigiert werden, welcher durch die endliche Ausdehnung des Fokuspunktes 10 des Lasers verursacht wird, und welcher dafür sorgen würde, dass eine gravierte Fläche immer an jeder Seite um einen halben Durchmesser eines Fokuspunktes 10 des Lasers größer ist als gewollt. Diese Korrektur bezüglich der endlichen Ausdehnung des Fokuspunktes 10 des Lasers ist entgegengerichtet der Korrektur durch den Korrektur-Offset. Bevorzugt wird der Durchmesser des Fokuspunktes 10 des Lasers konstant gehalten.

Der Durchmesser des Fokuspunktes 10 des Lasers kann bevorzugt zwischen 10 µm und 30 µm, bevorzugt zwischen 15 µm und 25 µm betragen.

Bevorzugt kann vorgesehen sein, dass der Korrektur-Offset 8 mit der Tiefe der Gravurschicht 3 zunimmt. Hierbei hat sich gezeigt, dass mit zunehmender Tiefe die benötigte Korrektur, und daher auch die Größe des Korrektur-Offsets 8 zunimmt. In Fig. 3 ist die Zunahme des Korrektur-Offset 8 für die bevorzugte Ausführungsform dargestellt, wobei der Korrektur-Offset 8 der Abstand zwischen der Flanke 12 des Soll-Tiefenprofils 4 und der strichlinierten Kurve darstellt, welche strichlinierten Kurve der Flanke 12 der Steuer-Gravurschichten 9 entspricht. Das führt dazu, dass mit zunehmender Größe des Korrektur-Offsets 8 bei zunehmender Tiefe die zu gravierenden Bereiche 7 immer größer werden im Vergleich zu dem als Vorlage dienenden Soll-Tiefenprofil 4, um ein dem Soll-Tiefenprofil 4 entsprechendes Tiefenprofil zu erhalten.

Bei der Adaptierung des Randes 6 eines zu gravierenden Bereiches 7 kann es hierbei vorkommen, dass bei einer ersten Tiefe der Gravurschicht 3 der Korrektur-Offset 8 im Wesentlichen so groß ist, wie der halbe Durchmesser des Fokuspunktes 10 des Lasers. Bei Tiefen der Gravurschicht 3 kleiner der ersten Tiefe werden die zu gravierenden Bereiche 7 bei der Erstellung der Steuer-Gravurschichten 9 verkleinert, während bei Tiefen der Gravurschicht 3 größer der ersten Tiefe werden die zu gravierenden Bereiche 7 bei der Erstellung der Steuer-Gravurschichten 9 vergrößert werden.

Weiters kann vorgesehen sein, dass außerhalb eines zu gravierenden Bereiches 7 einer, einer Oberseite 11 der Intaglio-Stichtiefdruckplatte 1 nächstliegenden Steuer-Gravurschicht 9 angeordnete zu gravierende Bereiche 7 bei der Erstellung der Steuer-Gravurschichten 9 gelöscht werden. Die der Oberseite 11 der Intaglio-Stichtiefdruckplatte 1 nächstliegenden Steuer-Gravurschicht 9 ist jene der ersten Gravurschicht 17. Es wird daher überprüft, ob ein zu gravierender Bereich 7 einer in der Tiefe liegenden Steuer-Gravurschicht 9 über den zu gravierender Bereich 7 der an der Oberseite 11 liegenden Steuer-Gravurschicht 9 hinausgeht, wobei der darüber hinausgehende Bereich gelöscht wird. Dies kann der Fall bei großen Flankenwinkeln sein. Dadurch kann verhindert werden, dass bei hohen Flankenwinkeln der zu gravierende Bereich 7 einer in der Tiefe liegenden Gravurschicht 3 durch den Korrektur-Offset 8 oberflächlich über die Umrandung der jeweiligen Vertiefung hinaus Material abgetragen wird.

## Patentansprüche

1. Verfahren zum Gravieren einer Intaglio-Stichtiefdruckplatte (1) mit einem Laser, wobei ein Tiefenprofil (2) der Intaglio-Stichtiefdruckplatte (1) durch Gravieren mehrerer Gravurschichten (3) mittels des Lasers erzeugt wird, wobei anhand eines vorgegebenen Soll-Tiefenprofils (4) für jede der Gravurschichten (3) eine Soll-Gravurschicht (5) bestimmt wird, **dadurch gekennzeichnet, dass** für Ränder (6) der zu gravierenden Bereiche (7) der Soll-Gravurschichten (5) Flankenwinkel bestimmt werden, und zur Verringerung der Abweichung eines Soll-Tiefenprofils von dem tatsächlich gravierten Tiefenprofil für jede Soll-Gravurschicht (5) und jeden Flankenwinkel in dieser Soll-Gravurschicht (5) ein Korrektur-Offset (8) bestimmt wird, dass für die Erstellung von Steuer-Gravurschichten (9) die zu gravierenden Bereiche (7) jeder Soll-Gravurschichten (5) an den Rändern (6) mittels des jeweiligen Korrektur-Offsets (8) adaptiert werden, und dass die Steuer-Gravurschichten (9) zur Steuerung des Lasers beim Gravieren der Gravurschichten (3) verwendet werden.

2. Verfahren nach Anspruch 1, **dadurch gekennzeichnet, dass** eine Wertetabelle an Korrektur-Offsets (8) für unterschiedliche Flankenwinkel und Tiefen bereitgestellt wird.

3. Verfahren nach Anspruch 1 oder 2, **dadurch gekennzeichnet, dass** das Soll-Tiefenprofil (4) lediglich gerade Flanken (12) aufweist.

4. Verfahren nach einem der Ansprüche 1 bis 3, **dadurch gekennzeichnet, dass** das Soll-Tiefenprofil (4) im Wesentlichen lediglich einen einzigen Flankenwinkel aufweist.

5. Verfahren nach einem der Ansprüche 1 bis 4, **dadurch gekennzeichnet, dass** der Korrektur-Offset (8) mit der Tiefe der Gravurschicht (3) zunimmt.

6. Verfahren nach einem der Ansprüche 1 bis 5, **dadurch gekennzeichnet, dass** die zu gravierenden Bereiche (7) der Soll-Gravurschichten (5) zur Erstellung der Steuer-Gravurschichten (9) an den Rändern (6) um den jeweiligen Korrektur-Offset (8) umlaufend vergrößert werden.

7. Verfahren nach einem der Ansprüche 1 bis 6, **dadurch gekennzeichnet, dass** die zu gravierenden Bereiche (7) der Soll-Gravurschichten (5) zur Erstellung der Steuer-Gravurschichten (9) an den Rändern (6) um einen halben Durchmesser eines Fokuspunktes (10) des Lasers umlaufend verkleinert werden.

8. Verfahren nach einem der Ansprüche 1 bis 7, **dadurch gekennzeichnet, dass** außerhalb eines zu gravierenden Bereiches (7) einer, einer Oberseite (11) der Intaglio-Stichtiefdruckplatte (1) nächstliegenden Steuer-Gravurschicht (9) angeordnete zu gravierende Bereiche (7) bei der Erstellung der Steuer-Gravurschichten (9) gelöscht werden.

## Claims

1. Method for engraving an intaglio gravure printing plate (1) with a laser,
wherein a depth profile (2) of the intaglio gravure printing plate (1) is produced by engraving several engraving layers (3) by means of the laser, wherein a target engraving layer (5) is determined for each of the engraving layers (3) on the basis of a predetermined target depth profile (4), **characterized in that** flank angles are determined for edges (6) of the regions (7) of the target engraving layers (5) to be engraved, and for reducing the deviation of a target depth profile from the actually engraved depth profile, a correction offset (8) is determined for each target engraving layer (5) and each flank angle in said target engraving layer (5), **in that** the regions (7) to be engraved of each target engraving layer (5) are adapted at the edges (6) by means of the respective correction offset (8) in order to produce control engraving layers (9), and **in that** the control engraving layers (9) are used to control the laser when engraving the engraving layers (3).

2. Method according to claim 1, **characterized in that** a value table of correction offsets (8) for different flank angles and depths is provided.

3. Method according to claim 1 or 2, **characterized in that** the target depth profile (4) has only straight flanks (12).

4. Method according to one of claims 1 to 3, **characterized in that** the target depth profile (4) substantially has only a single flank angle.

5. Method according to one of claims 1 to 4, **characterized in that** the correction offset (8) increases with the depth of the engraving layer (3).

6. Method according to one of claims 1 to 5, **characterized in that** the regions (7) to be engraved of the target engraving layers (5) are enlarged circumferentially by the respective correction offset (8) at the edges (6) in order to produce the control engraving layers (9).

7. Method according to one of the claims 1 to 6, **characterized in that** the regions (7) to be engraved of the target engraving layers (5) are circumferentially reduced by half a diameter of a focal point (10) of the laser at the edges (6) in order to produce the control engraving layers (9).

8. Method according to one of claims 1 to 7, **characterized in that** regions (7) to be engraved, which are arranged outside a region (7) to be engraved of a control engraving layer (9) closest to an upper side (11) of the intaglio gravure printing plate (1), are deleted during the production of the control engraving layers (9).

## Revendications

1. Procédé pour la gravure d'une plaque d'impression en taille-douce (1) avec un laser, dans lequel un profil de profondeur (2) de la plaque d'impression en taille-douce (1) est produit en gravant plusieurs couches de gravure (3) au moyen du laser, dans lequel une couche de gravure de consigne (5) est déterminée à l'aide d'un profil de profondeur de consigne (4) prédéterminé pour chacune des couches de gravure (3), **caractérisé en ce que** des angles de flanc sont déterminés pour les bords (6) des zones à graver (7) des couches de gravure de consigne (5) et, afin de réduire l'écart entre un profil de profondeur de consigne et le profil de profondeur effectivement gravé, un décalage de correction (8) est déterminé pour chaque couche de gravure de consigne (5) et chaque angle de flanc dans cette couche de gravure de consigne (5), **en ce qu'**afin de créer des couches de gravure de guidage (9), les zones à graver (7) de chaque couche de gravure de consigne (5) sont adaptées sur les bords (6) au moyen du décalage de correction (8) correspondant, et **en ce que** les couches de gravure de guidage (9) sont utilisées pour guider le laser lors de la gravure des couches de gravure (3).

2. Procédé selon la revendication 1, **caractérisé en ce qu'**un tableau de valeurs de décalage de correction (8) est fourni pour différents angles de flancs et différentes profondeurs.

3. Procédé selon la revendication 1 ou 2, **caractérisé en ce que** le profil de profondeur de consigne (4) présente seulement des flancs droits (12).

4. Procédé selon l'une des revendications 1 à 3, **caractérisé en ce que** le profil de profondeur de consigne (4) présente pour l'essentiel un seul angle de flanc.

5. Procédé selon l'une des revendications 1 à 4, **caractérisé en ce que** le décalage de correction (8) augmente avec la profondeur de la couche de gravure (3).

6. Procédé selon l'une des revendications 1 à 5, **caractérisé en ce que** les zones à graver (7) des couches de gravure de consigne (5) sont augmentées sur tout le tour des bords (6) du décalage de correction (8) correspondant pour créer les couches de gravure de guidage (9).

7. Procédé selon l'une des revendications 1 à 6, **caractérisé en ce que** les zones à graver (7) des couches de gravure de consigne (5) sont réduites sur tout le tour des bords (6) de la moitié du diamètre d'un point focal (10) du laser pour créer les couches de gravure de guidage (9).

8. Procédé selon l'une des revendications 1 à 7, **caractérisé en ce que** des zones à graver (7) situées en dehors d'une zone à graver (7) d'une couche de gravure de guidage (9) la plus proche d'une face supérieure (11) de la plaque d'impression en taille-douce (1) sont effacées lors de la création des couches de gravure de guidage (9).
